# EUROPÄISCHE PATENTANMELDUNG

(11) **EP 2 489 908 A1**
(43) Veröffentlichungstag der Anmeldung: **22.08.2012**
(21) Anmeldenummer: 12002855.0
(22) Anmeldetag: 20.05.2010
(51) Int. Cl.: F16J 15/08, B21D 53/20

(54) **Verfahren zur Herstellung von metallischen Dichtungselementen**

(30) Priorität: 22.05.2009 DE 102009022392
(62) Teilanmeldung aus: 10726417.8
(71) Anmelder: Federal-Mogul Sealing Systems Gmbh, 57562 Herdorf (DE)
(72) Erfinder: Prehn, Rolf, 51688 Wipperfürth (DE)
(74) Vertreter: Döpp, Ludger

(57) **Zusammenfassung**

Verfahren zur Herstellung von metallischen Dicht- und Stopperelementen für Flachdichtungen (45), indem mindestens ein metallischer blech- oder folienartig ausgebildeter Grundkörper (1,5,7,11,14,16,19,25,26,27) zu einem ein Vorprodukt bildendes Rohr (2,5,8,13,15,18,23,28,35,38) gewickelt bzw. gerollt wird, die einander gegenüberliegenden Endbereiche (3,4,9,10,17,18) oder Teile bzw. die gesamte Kontaktfläche des Rohrs miteinander durch stoff-, kraft- oder formschlüssige Verbindungstechniken oder Kombinationen daraus in Wirkverbindung gebracht werden, das Rohr bzw. daraus erzeugte Rohrabschnitte zumindest partiell konturiert und mindestens ein ring- oder scheibenförmig ausgebildetes Bauteil zur Erzeugung eines Dicht- bzw. Stopperelements (24,29,44) im konturierten Bereich des Rohrs bzw. des Rohrabschnitts abgetrennt wird, dadurch gekennzeichnet, dass durch partielles Einschneiden in einem blech- oder folienartig ausgebildeten Grundkörper (16) mit anschließender Verformung in Längs- oder Querrichtung des Grundkörpers ein zumindest partiell sich erstreckendes Streckmetall (17) erzeugt wird.

## Beschreibung

Die Erfindung betrifft ein Verfahren zur Herstellung von metallischen Dichtungselementen, insbesondere Stopperelementen für Flachdichtungen.

Ringförmig ausgebildete Stopperelemente werden derzeit in Serien-Zylinderkopfdichtungen eingesetzt, jedoch bisher aus Blechen ausgestanzt. Aufgrund der Tatsache, dass moderne Triebwerke bzw. Motoren immer höhere Ansprüche an die Dichtungstechnik stellen, weil sowohl die Verbrennungsdrücke als auch die Verbrennungstemperaturen stetig ansteigen, müssen immer bessere technische Lösungen gefunden werden, um diesen Anforderungen gerecht zu werden.

Die Kosten für ausgestanzte Stopperringe und deren Verbindung mit der/den Lage(n) einer Zylinderkopfdichtung (z.B. Laserschweißen) sind erheblich. Durch den Einsatz von Blechen stellt sich ein hoher Materialverlust beim Ausstanzen des Stopperelementes ein, wodurch darüber hinaus sehr hohe Materialkosten gegeben sind.

Die DE 197 55 391 A1 offenbart ein Verfahren zur Herstellung eines Dichtrings, bei dem aus einem Blech zunächst ein Hohlzylinder gebildet wird, der durch eine Nachverformung in die Gestalt eines Versteifungsringes überführt und nachfolgend mit einer Dichtlippe aus polymerem Werkstoff verbunden wird. Das Blech wird durch Einrollen abfallfrei in die Gestalt des Hohlzylinders überführt.

Der US 4,162,569 ist ein Verfahren zur Herstellung einer metallischen Flachdichtung zu entnehmen. Aus Hohlkörpern unterschiedlicher Wanddicke werden entweder Ringe abgeschnitten und einer spezifischen Nachverformung unterzogen oder aber am Rohrende wird ein Flansch angeformt und anschließend eine Ablängung vom Rohr herbeigeführt. Derartige Bauteile können als Brennraumeinfassung im Bereich einer Zylinderkopfdichtung eingesetzt werden.

Der Erfindung liegt die Aufgabe zugrunde, ein Verfahren zur Herstellung metallischer Stopperelemente bereit zu stellen, mit welchem ein geringst möglicher Materialeinsatz verbunden ist.

Darüber hinaus sollen bei den so hergestellten Stopperelementen sowohl das Dichtungsverhalten als auch die Federeigenschaften im Betriebszustand verbessert werden.

Schließlich soll eine Möglichkeit aufgezeigt werden, bestimmte Oberflächeneigenschaften am jeweiligen Stopperelement einzustellen, durch welche eine bessere Verteilung der Schraubenkräfte herbeigeführt werden kann.

Diese Aufgabe wird gelöst durch ein Verfahren zur Herstellung von metallischen Dicht- und Stopperelementen für Flachdichtungen, indem mindestens ein metallischer blech- oder folienartig ausgebildeter Grundkörper zu einem ein Vorprodukt bildendes Rohr gewickelt bzw. gerollt wird, die einander gegenüberliegenden Endbereiche oder Teile bzw. die gesamte Kontaktfläche des Rohrs miteinander durch stoff-, kraft- oder formschlüssige Verbindungstechniken oder Kombinationen daraus in Wirkverbindung gebracht werden, das Rohr bzw. daraus erzeugte Rohrabschnitte zumindest partiell konturiert und mindestens ein ring- oder scheibenförmig ausgebildetes Bauteil zur Erzeugung eines Dicht- bzw. Stopperelements im konturierten Bereich des Rohrs bzw. des Rohrabschnitts abgetrennt wird, dadurch gekennzeichnet, dass durch partielles Einschneiden in einem blech- oder folienartig ausgebildeten Grundkörper mit anschließender Verformung in Längs- oder Querrichtung des Grundkörpers ein zumindest partiell sich erstreckendes Streckmetall erzeugt wird.

Vorteilhafte Weiterbildungen des erfindungsgemäßen Verfahrens sind den zugehörigen verfahrensgemäßen Unteransprüchen zu entnehmen.

Als Grundkörper können folgende Materialien eingesetzt werden:
- Erzeugen eines Streckmetalls durch zumindest partielles Einbringen von Einschnitten in Längs- und/oder Querrichtung eines metallischen Grundkörpers und entsprechende Verformung des Grundkörpers in Längs- und/oder Querrichtung
- Erzeugung eines Grundkörpers aus Abschnitten eines Streckmetalls und Abschnitten eines Blech- oder Folienstreifens in neben- und/oder übereinander angeordneter Form.

Das Ausschneiden eines oder mehrerer Blech- bzw. Folienstreifen kann mittels Laserschneiden, Feinschneiden oder ähnlichen Verfahren erfolgen. Maßgeblich ist hierbei, dass die Kanten, die anschließend miteinander, insbesondere verschweißt werden, gratfrei sind. Eventuell kann es hilfreich sein, keine geradlinig verlaufenden Endbereiche miteinander zu verschweißen, sondern eine Art Zickzack- oder Wellenkontur zu verwenden, um eine bessere Fügung zu erzielen und zudem der späteren Schweißnaht weitere Eigenschaften zu verleihen (z. B. eine bestimmte Steifigkeit oder ähnliches).

Der aus einem einzelnen Blech- bzw. Folienstreifen, respektive den vorab angegebenen Elementen gebildete Grundkörper wird anschließend zu einem Rohr geformt, gewickelt bzw. gerollt und wie bereits angesprochen an den einander gegenüberliegenden Endbereichen, über deren gesamte Blechbreite gesehen, miteinander in Wirkverbindung gebracht.

Ebenfalls denkbar ist die Variante, dass ein quasi endloses Blech zu einem Rohr gerollt oder gewickelt wird, wobei die Verbindung dann nicht nur an den Endbereichen, sondern gleichzeitig oder alternativ zumindest partiell an den aufeinander liegenden Kontaktflächen der Wickelbereiche herbeigeführt werden kann.

Ein derartiges Rohr ist relativ gut zu handhaben und kann einem Konturier- bzw. Formgebungsprozess zugeführt werden. Hierbei ist denkbar, mit Rollen oder einer Art

Stempel die gewünschte Form (beispielsweise ein L-Profil) in das Rohr zu rollen bzw. zu prägen. Dies kann entweder an einem Ende des Rohrs geschehen, um einzelne Ringe/Scheiben herzustellen oder aber über die gesamte Länge des Rohres hinweg, damit gleichzeitig mehrere Ringe abgetrennt werden können. Der Konturierprozess kann dabei in einem oder mehreren Schritten erfolgen.

Der jeweils konturierte Bereich des Rohrs kann anschließend zur Erzeugung von Ringen oder Scheiben aufgeschnitten bzw. ausgestanzt werden, um einzelne oder mehrere metallische Dichtungselemente zu erhalten. Hierfür eignet sich ein Stanzprozess, Feinschneiden oder beispielsweise auch eine Art Rollschneiden, Laserschneiden, Wasserstrahlschneiden oder ähnliches. Auf diese Art und Weise entsteht nahezu kein Materialverlust.

Darüber hinaus ist es möglich das vorgefertigte Rohr in Rohrabschnitte zu schneiden und diese beispielsweise mittels einer Presse zu Scheiben zu formen.

Ein derartiges Stopperelement oder ein solcher Rohrabschnitt ist relativ gut zu handhaben und kann beispielsweise, wenn der Ring eine L-Form aufweist, einem Bördelprozess zugeführt werden.

Im Vergleich zu einem geprägten Stopper weist diese Variante die Vorzüge des bereits bekannten Schweißstoppers (Laspot) auf. Die Funktionsweise ist simpel. Im Einbauzustand in der Zylinderkopfdichtung wird die eingeleitete Schraubenkraft auf definierte Flächen verteilt. Das Tooling ist im Vergleich zu Prägewerkzeugen (insbesondere Topographie) sehr einfach.

Die Verbindung bzw. die Integration des jeweiligen Stopperelements in eine Dichtung bzw. ein Dichtsystem kann durch kraft-, form- oder stoffschlüssige Verfahren bzw. Kombinationen daraus erfolgen.

Sehr gut geeignet sind Schweißverfahren, z. B. Laserschweißen oder Widerstandsschweißen, wenn beim Ausstanzen des Rings/der Scheiben auch gleich kleine Erhebungen (Warzen) mit eingeprägt werden, um eine kleine definierte Kontaktfläche für das Widerstandsschweißen herzustellen. Des Weiteren kann auch durch einfaches Umbördeln die Verbindung mit einer Lage einer Zylinderkopfdichtung erfolgen. Es ist ebenfalls denkbar, in eine Distanzlage der Zylinderkopfdichtung eine kleine Vertiefung bzw. eine Kröpfung einzuprägen, damit die Position des Stoppers definiert ist, um das Stopperelement anschließend in diese Vertiefung bzw. Kröpfung einzukleben oder einzuschweißen.

Der Erfindungsgegenstand ist anhand eines Ausfiihrungsbeispiels in der Zeichnung dargestellt und wird wie folgt beschrieben. Es zeigen:
- Figuren 1 bis 8: Prinzipskizzen unterschiedlich gestalteter Vorprodukte zum Erzeugen gewickelter oder gerollter Rohre;
- Figur 9 und 10: Prinzipskizzen von Bearbeitungsschritten zur Konturierung von Rohren;
- Figuren 11 bis 13: Prinzipskizze zur Bearbeitung eines Rohrs, um daraus einzelne ringförmig ausgebildete Dichtungselemente herzustellen;
- Figuren 14 bis 17: Darstellung unterschiedlich gestalteter ring- oder scheibenförmig ausgebildeter Dichtungselemente;
- Figur 18: Prinzipskizze einer Zylinderkopfdichtung, beinhaltend eines der Dichtungselemente gemäß den Figuren 14 bis 17;
- Figuren 19 und 20: alternative Verfahren zur Herstellung von Dichtungselementen.

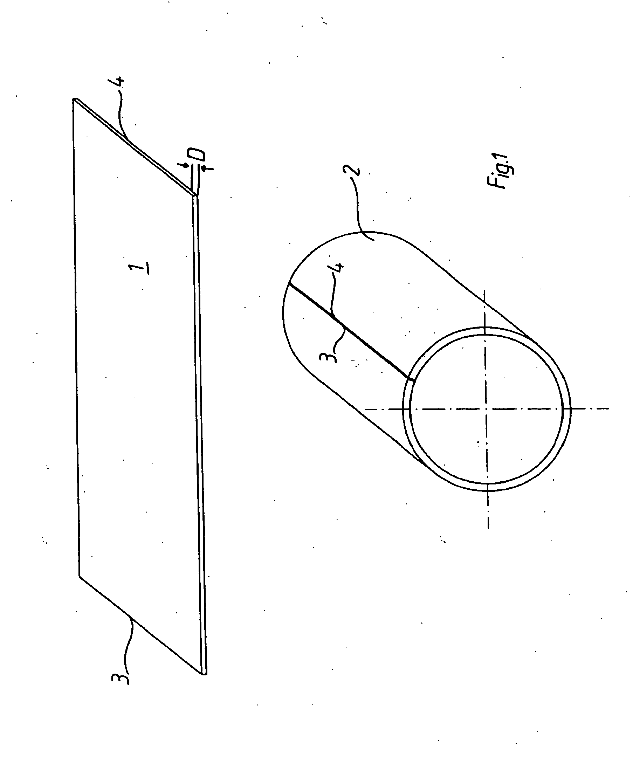

Die Figuren 1 bis 8 zeigen Prinzipskizzen unterschiedlich gestalteter Vorprodukte zum Erzeugen gewickelter oder gerollter Rohre.

Figur 1 zeigt einen Blechstreifen 1 vorgebbarer Materialstärke D 1, der in Abhängigkeit von dem jeweiligen Anwendungsfall für das daraus herzustellende Dichtungselement aus unterschiedlichsten metallischen Legierungen bestehen kann. Der Blechstreifen 1 hat, über seine Erstreckung gesehen, gleiche Materialstärke D. Der Blechstreifen 1 wird, wie im unteren Bild der Figur 1 erkennbar ist, zu einem Rohr 2 gewickelt bzw. gerollt, wobei die Endbereiche 3,4 des Blechstreifens 1, in diesem Beispiel, miteinander verschweißt werden. Bedarfsweise können hier auch andersartige Konturen (nicht geradlinig) vorgesehen werden, um weitere Eigenschaften in der Schweißnaht einzustellen. Durch diese Maßnahme wird ein Rohr 2 mit definiertem Durchmesser gebildet. Weitere Rohre aus gleichen oder anderen Materialien mit kleineren oder größeren Durchmessern können erzeugt werden, die dann mit dem Rohr 2 durch Ineinanderschieben in Wirkverbindung gebracht werden.

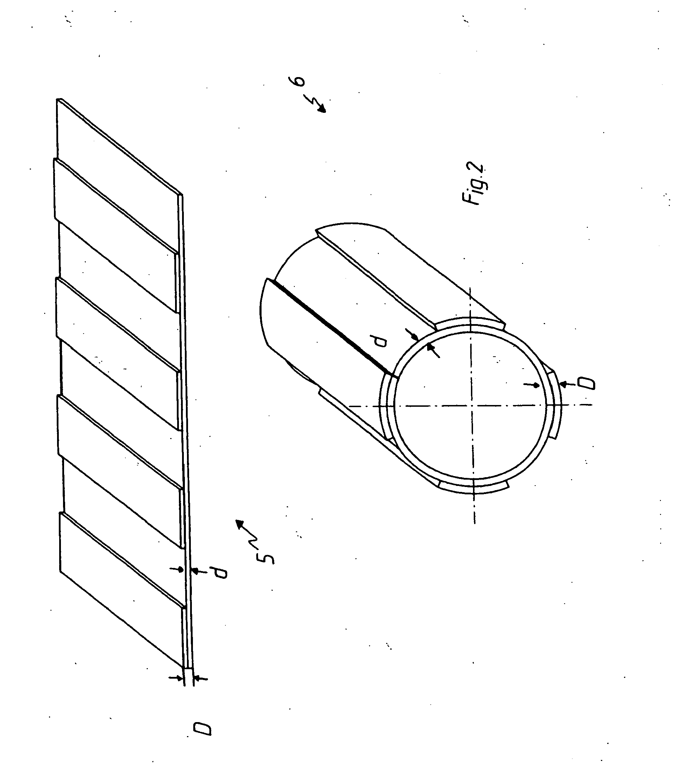

Figur 2 zeigt einen alternativen Blechstreifen 5, der ebenfalls eine Materialstärke D aufweist. Zur Erzeugung unterschiedlicher Materialstärken (Verhältnis D/d) wird der Blechstreifen 5 mindestens einem Walzvorgang unterzogen, wodurch die ursprüngliche Materialstärke (D) reduziert wird. Dieser Blechstreifen 5 wird nun aufgerollt bzw. aufgewickelt, so dass ein Rohr 6 entsteht, das, in Umfangsrichtung gesehen, Bereiche geringerer Materialstärke d und Bereiche größerer Materialstärke D aufweist.

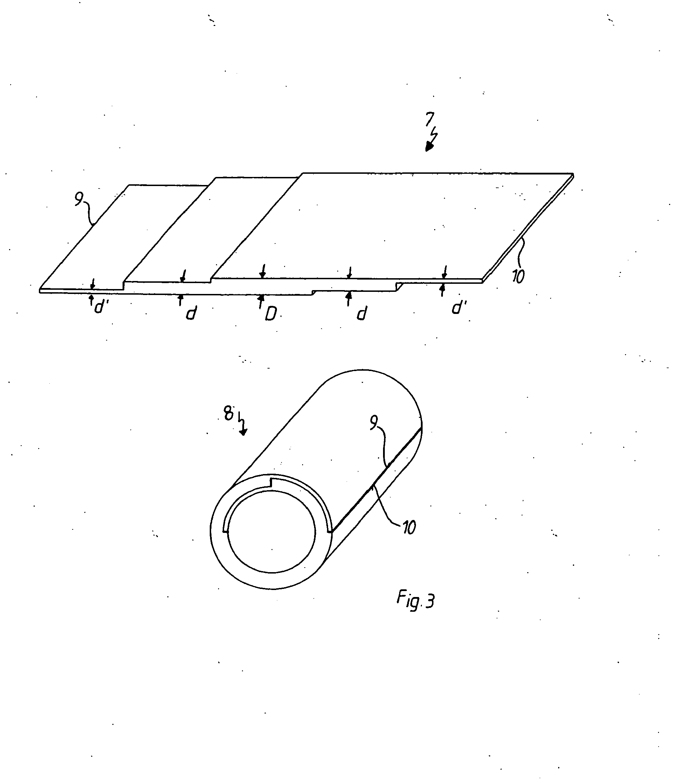

Figur 3 zeigt eine weitere Ausführungsform. Ein Blechstreifen 7 mit einer Grundmaterialstärke D wird ähnlich wie bei Figur 2 beschrieben, einem Walzvorgang unterzogen, so dass reduzierte Materialstärken d, d' entstehen. Der Blechstreifen 7 wird wie bei den anderen Figuren bereits beschrieben, durch Rollen oder Wickeln zu einem Rohr 8 umgeformt, wobei zur Bildung eines gleichmäßigen Aussendruchmessers die Endbereiche 9,10 nach dem Umform-/Roll-/Wickelvorgang ineinander liegen. Die Endbereiche 9,10 werden in Analogie zu den Figuren 1 und 2 durch Schweißen miteinander verbunden.

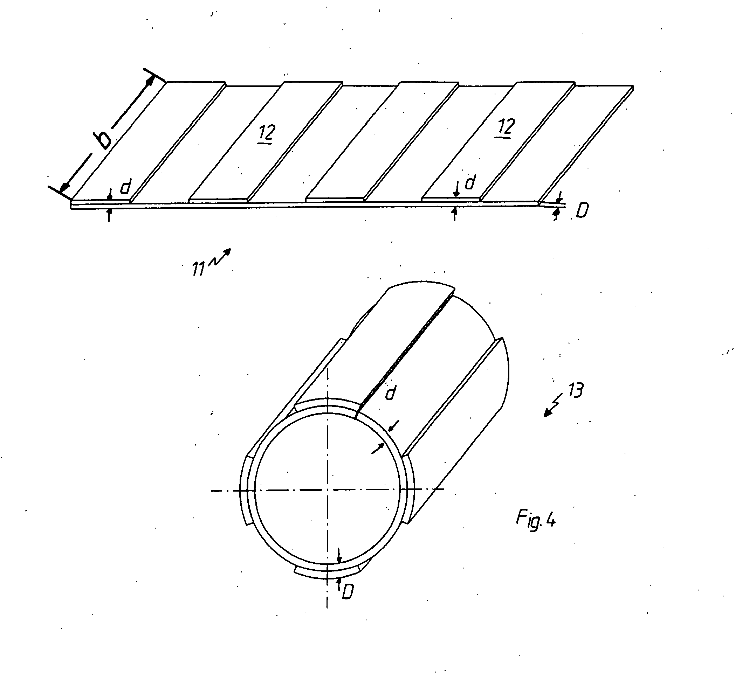

Figur 4 zeigt eine weitere Alternative zur Erzeugung eines Blechstreifens. Ein Grundblech 11 vorgebbarer Materialstärke D wird mit Blechabschnitten 12, ebenfalls vorgebbarer Materialstärke d und Breite b, an definierter Position (mindestens eine) belegt und mit dem Grundblech 11 stoff-, kraft- oder formschlüssig oder mit Kombinationen hieraus verbunden. In gleicher Weise, wie vorab beschrieben, wird der Blechstreifen 11 umgeformt, so dass, in Umfangsrichtung des erzeugten Rohrs 13 gesehen, Abschnitte mit einer geringeren Materialstärke d und Abschnitte größerer Materialstärke D gebildet werden.

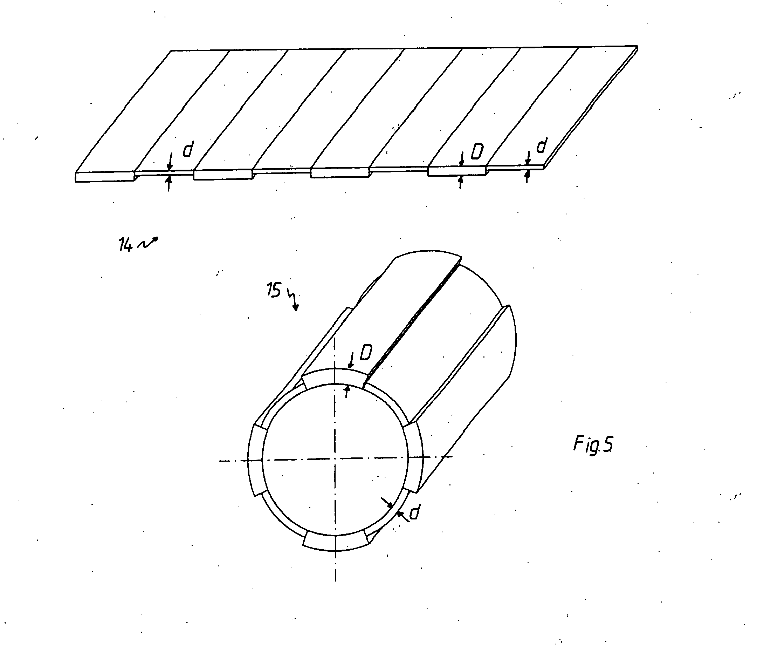

In Figur 5 werden Blechstreifen 14 verschiedener Breite und Dicke D,d an definierten Positionen miteinander kombiniert. Zum Einsatz kommen bekannte stoff-, kraft- oder formschlüssige Verfahren oder Kombinationen daraus. Dieses tailored Blank wird zu einem Rohr 15 umgeformt, wobei in Umfangsrichtung gesehen, Abschnitte größerer Materialstärke D und Abschnitte geringerer Materialstärke d gebildet sind.

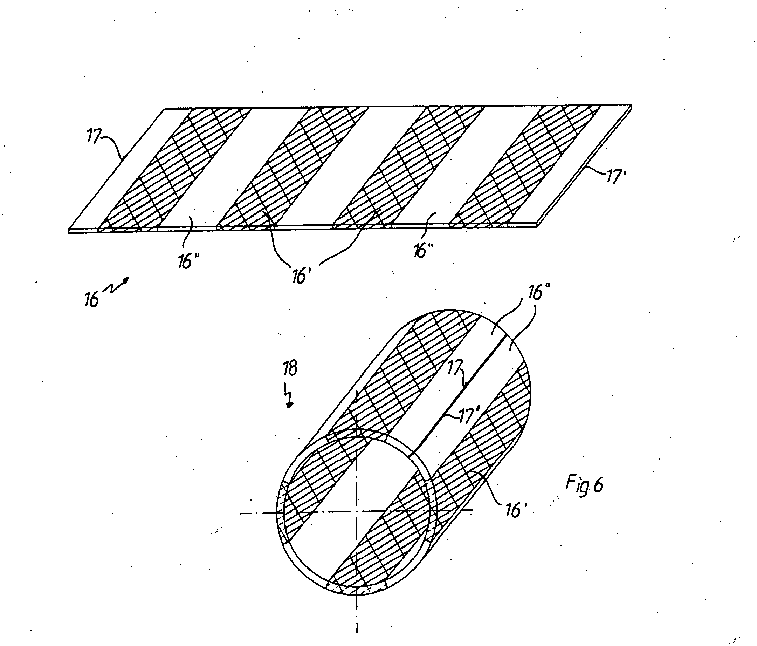

Figur 6 zeigt einen erfindungsgemäßen Grundkörper 16. Selbiger beinhaltet Bereiche aus Streckmetall 16', die durch Längs- und/oder Quereinschneiden im Grundkörper 16 mit anschließendem Auseinanderziehen in Längs- und/oder Querrichtung gebildet werden. Der Blechstreifen 16 wird in Analogie zu den vorangegangenen Figuren durch einen Umformvorgang bzw. Rollen oder Walzen zu einem Rohr 18 geformt, so dass, in Umfangsrichtung gesehen, Abschnitte aus Streckmetall 16' und Abschnitte 16" aus dem Blechgrundkörper 16 gebildet werden. Auch hier werden die Endbereiche 17,17' des Blechstreifens 16 beispielsweise durch Schweißen miteinander verbunden.

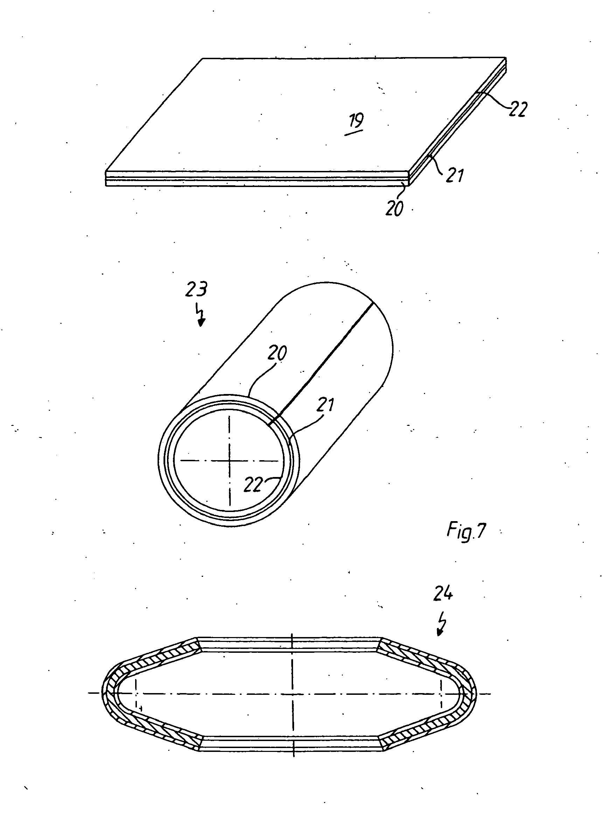

Figur 7 zeigt einen alternativen Blechstreifen 19, gebildet aus drei Lagen 20,21,22 gegebenenfalls unterschiedlicher Dicke und gegebenenfalls aus unterschiedlichen Materialien (z.B. Verbundwerkstoff). Der Blechstreifen 19 wird wie bereits beschrieben zu einem Rohr 23 umgeformt. Ein Dichtungselement 24, das aus einem ebenfalls dreilagigen Blechstreifen (nicht dargestellt) erzeugt wird, ist im unteren Bild der Figur 7 abgebildet.

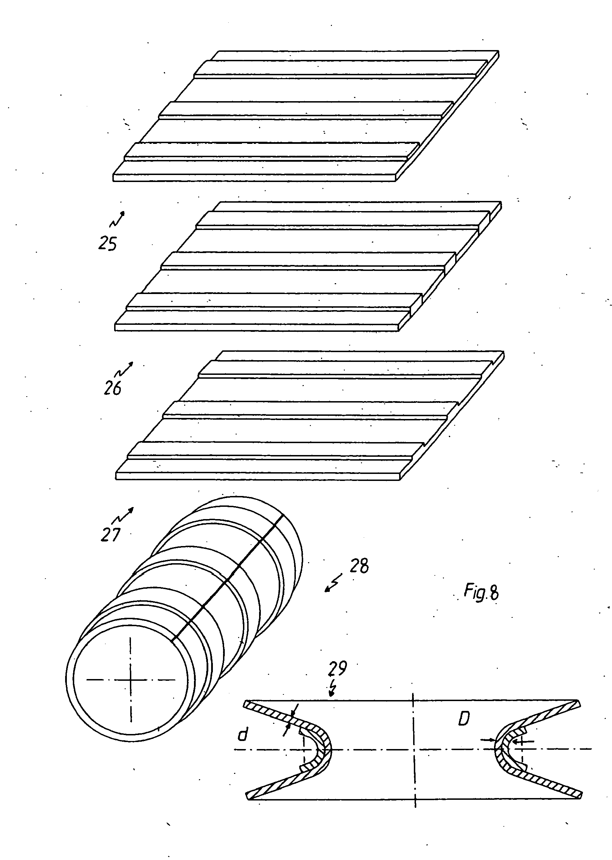

Figur 8 zeigt weitere alternativ ausgebildete Blechstreifen 25,26,27, die zu einem Rohr 28 umgeformt werden. Ein aus einem dieser Blechstreifen 25 bis 27, respektive dem Rohr 28, hergestelltes Dichtungselement 29 weist Bereiche größerer Materialstärke D und Bereiche geringerer Materialstärke d auf.

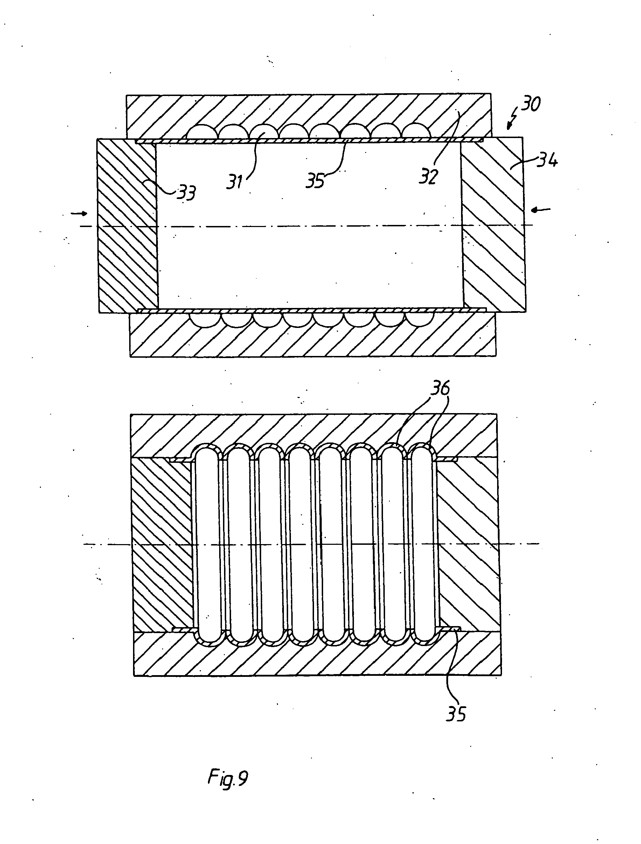

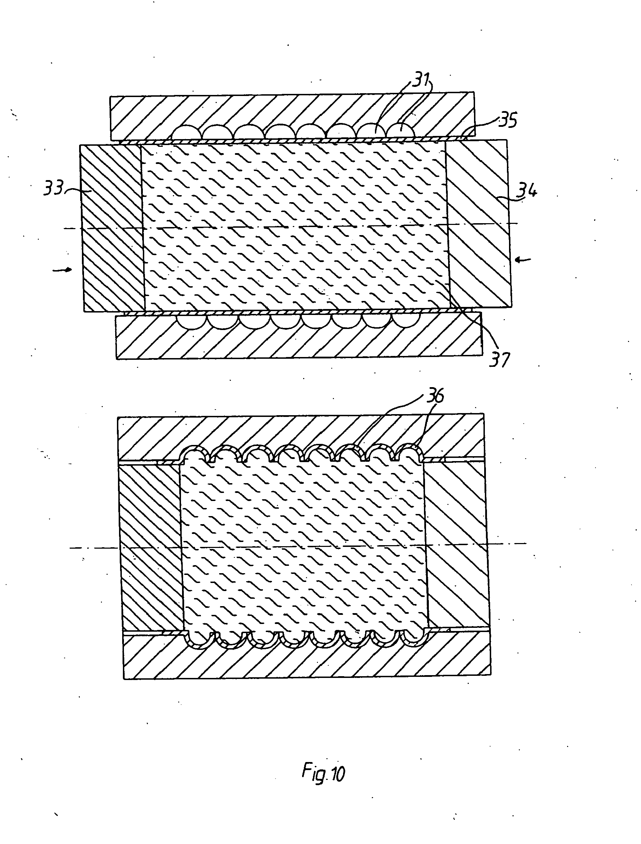

Die Figuren 9 und 10 zeigen mögliche Bearbeitungsschritte zur Konturierung von Rohren.

Figur 9 zeigt ein Werkzeug 30, beinhaltend einen mit Ausnehmungen 31 versehenen, zumindest zweiteiligen Grundkörper 32 (nicht dargestellt) sowie Stempel 33,34, die in Pfeilrichtung bewegt werden können. Infolge des mehrteiligen Aufbaus des Grundkörpers 32 können die umgeformten Rohre 35 später problemlos entnommen werden. Ein Rohr 35, das aus einem der in den Figuren 1 bis 8 dargestellten Vorprodukten gebildet sein kann (hier vereinfacht dargestellt), wird in den Bereich des Grundkörpers 32 gebracht. Durch Kraftaufbringung auf die Stempel 33,34 (Pfeilrichtung) und gegebenenfalls eines Innendrucks (z.B. durch ein Wirkmedium, wie Wasser oder Öl) wird nun die Wand des Rohrs 35 in die Ausnehmungen 31 eingedrückt, so dass definierte Konturen 36 gebildet werden. Dieses so konturierte Rohr 35 kann durch geeignete Bearbeitungswerkzeuge in Einzelringe aufgeteilt werden, die dann zur Erzeugung eines fertigen Dichtungsrings bedarfsweise einem weiteren Formgebungsprozess unterzogen werden.

Figur 10 zeigt ein alternatives Formgebungsverfahren, nämlich das Gummi-Umformen. Zwischen den Stempeln 33,34 ist ein Gummikörper 37 positioniert. Durch Druckbeaufschlagung des Gummikörpers 37 durch die Stempel 33,34 wird das Rohr 35 in die Ausnehmungen 31 hineingedrückt, so dass dann in Analogie zu Figur 9 die Konturen 36 gebildet werden.

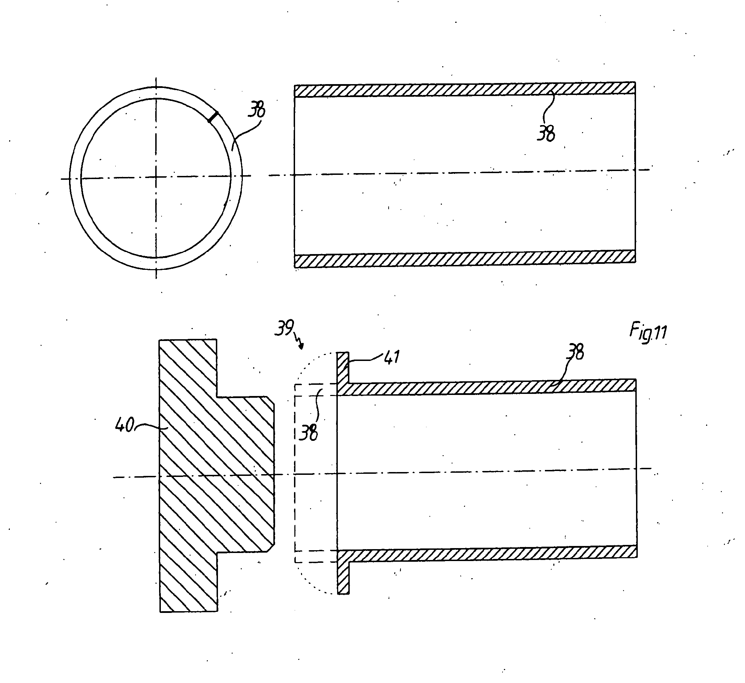

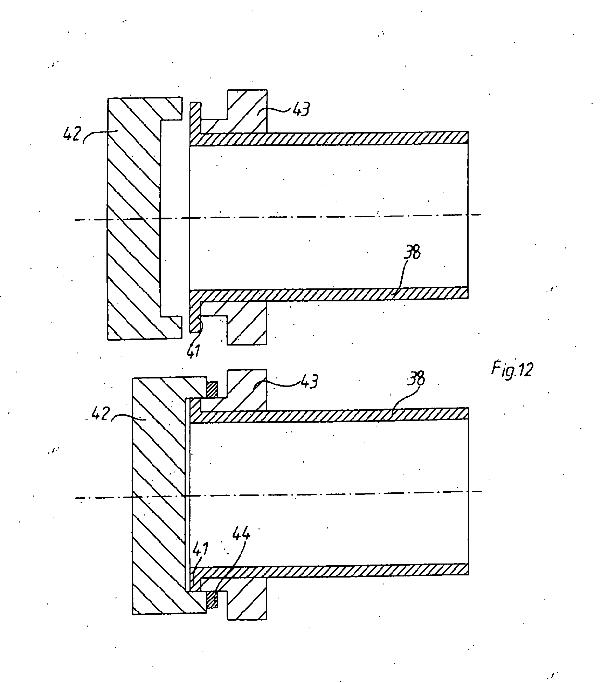

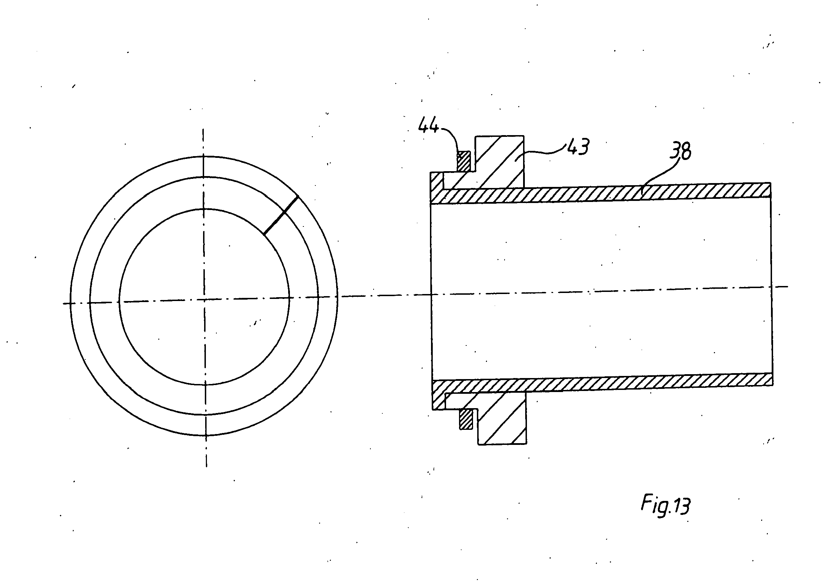

Die Figuren 11 bis 13 zeigen als Prinzipskizzen eine Abfolge von Bearbeitungsschritten zur Erzeugung von scheibenförmigen Stopperelementen. Erkennbar ist ein Rohr 38 (vereinfacht dargestellt), das aus einem der Vorprodukte gemäß Figuren 1 bis 8 gebildet sein kann. Im Bereich einer der Rohrenden 39 wird durch einen Stempel 40 ein radialer Ansatz 41 am Rohr 38 angeformt. Nach Anformung des Ansatzes 41 werden über weitere geeignete Werkzeuge 42,43 Ringe 44 vom radialen Ansatz 41 abgeschnitten.

Denkbar ist auch, dass dieser Prozess an Rohrabschnitten durchgeführt wird.

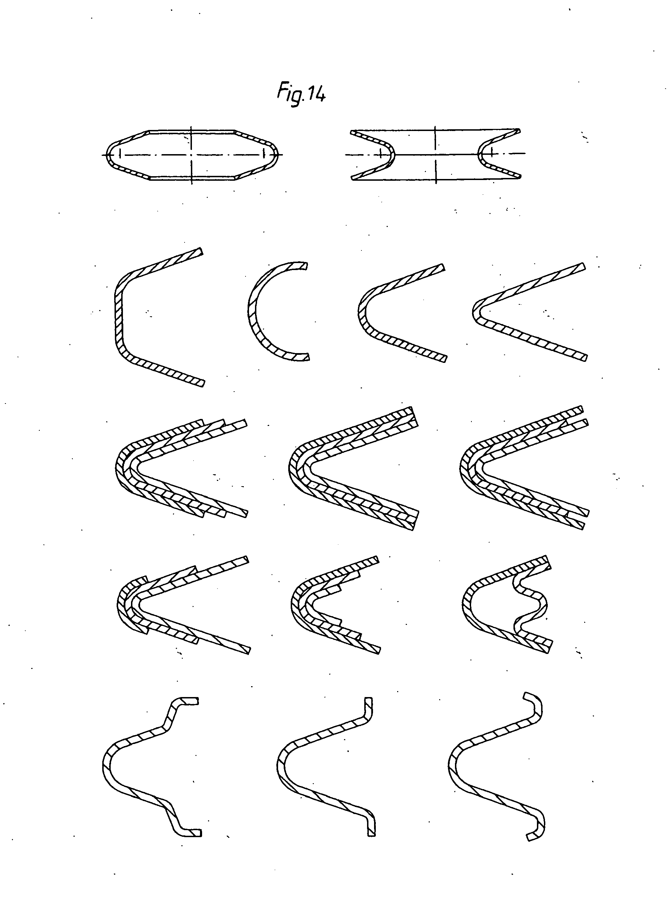

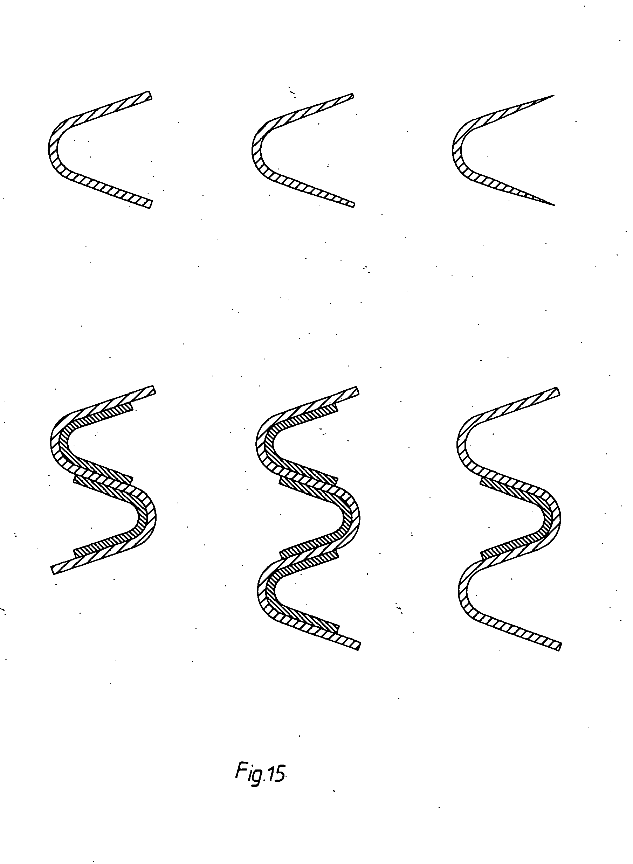

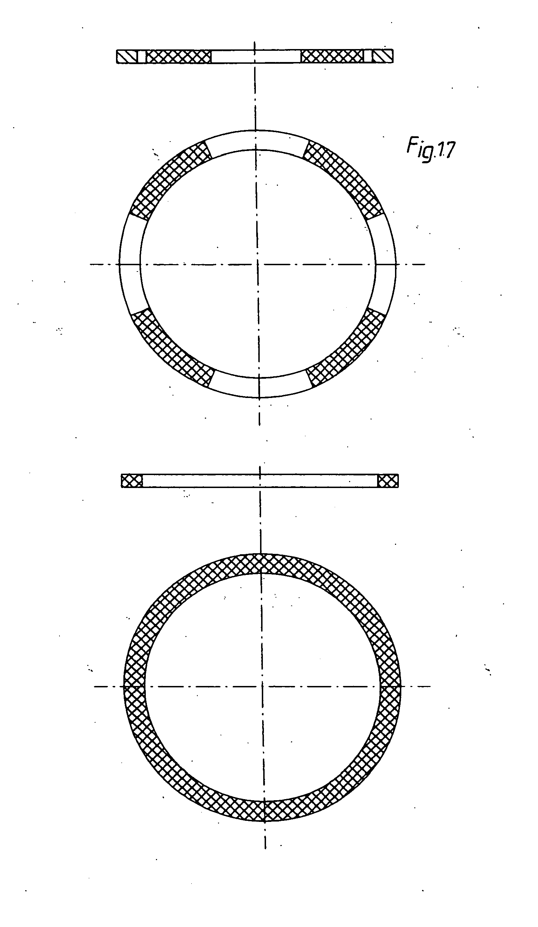

Die Figuren 14 bis 17 zeigen unterschiedlich ausgebildete ein- oder mehrlagige Dicht- bzw. Stopperelemente (nicht weiter beziffert). Die Dicht- bzw. Stopperelemente gemäß Figuren 14 bis 17 wurden aus Vorprodukten gemäß Figuren 1 bis 8 hergestellt.

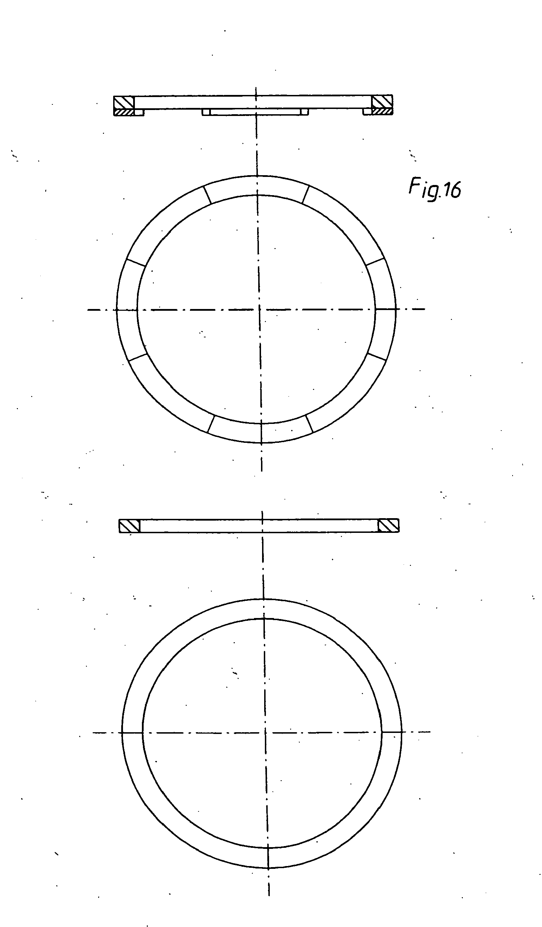

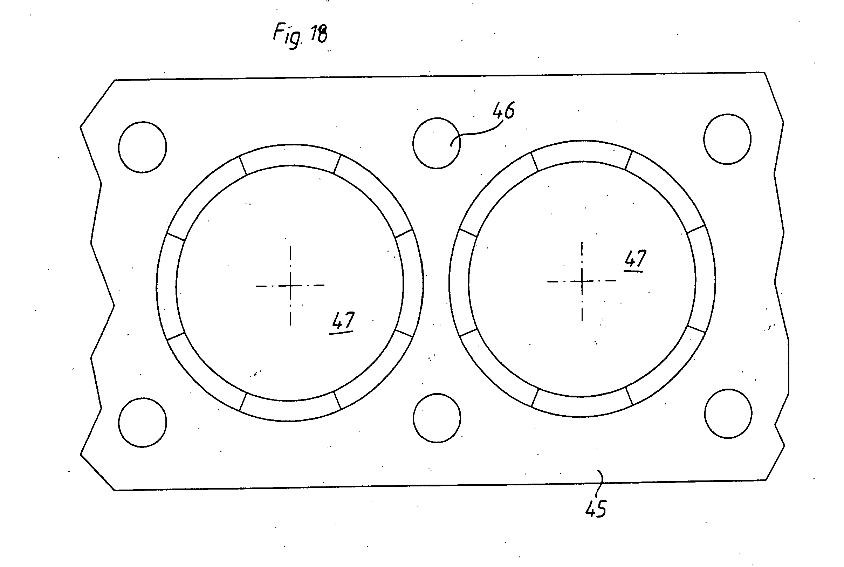

Figur 18 zeigt als Prinzipskizze eine Zylinderkopfdichtung 45. Erkennbar sind Schraubendurchgangslöcher 46 sowie Brennraumdurchgangsöffnungen 47. Im Bereich der Brennraumdurchgangsöffnungen 47 ist ein wie in Figur 16 dargestelltes Dicht- bzw. Stopperelement eingesetzt.

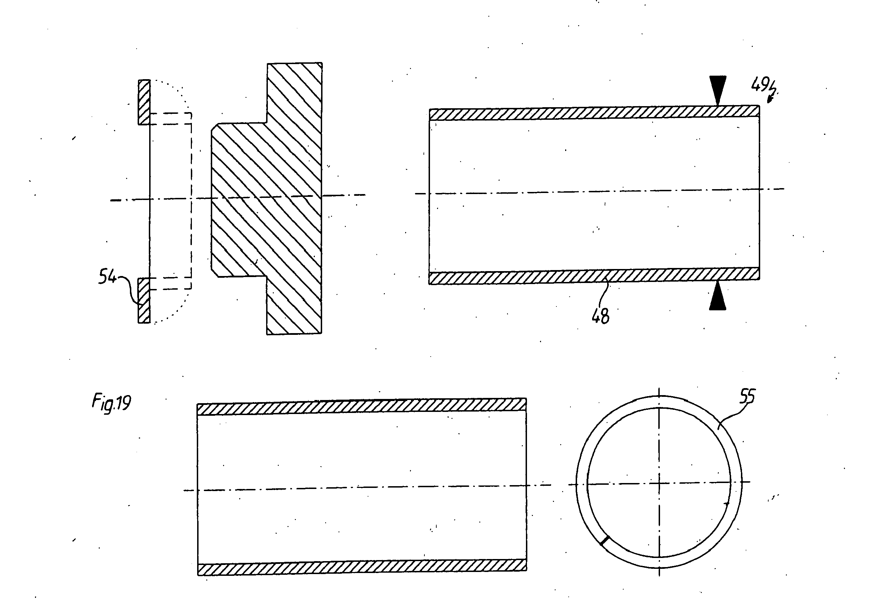

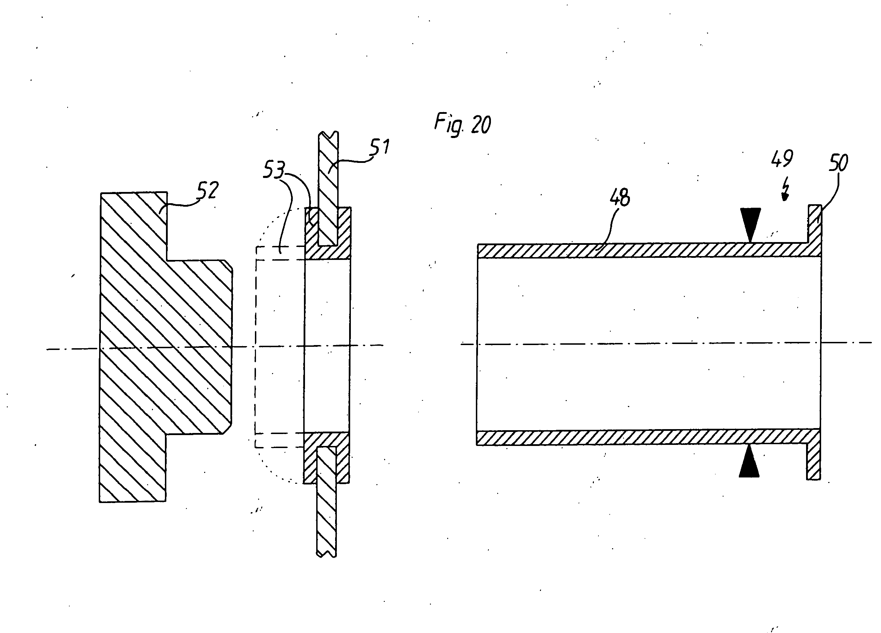

Die Figuren 19 und 20 zeigen alternative Verfahren zur Herstellung von Dicht- bzw. Stopperelementen.

In beiden Fällen werden von einem Rohr 48 Rohrabschnitte 49 abgeschnitten. Das Rohr 48 gemäß Figur 20 wurde vorab mit einem radialen Ansatz 50 versehen. Die Lage 51 einer nicht weiter dargestellten Zylinderkopfdichtung wird mit dem Ansatz 50 in Wirkverbindung gebracht und mittels eines Stempels 52 der verbleibende Restbereich 53 des Rohrabschnittes 49 in Richtung der Lage 51 umgeformt.

Der Rohrabschnitt 49 gemäß Figur 19 wird in ähnlicher Weise umgebördelt und abgeschnitten, so dass ein scheibenförmiges Dicht- oder Stopperelement 54 entsteht. Selbiges kann bedarfsweise mittels einer Presse weiterverarbeitet werden. Soll lediglich das Rohr 48 aufgeschnitten werden, entstehen einzelne ringförmige Dicht- oder Stopperelemente 55.

## Patentansprüche

1. Verfahren zur Herstellung von metallischen Dicht- und Stopperelementen für Flachdichtungen (45), indem mindestens ein metallischer blech- oder folienartig ausgebildeter Grundkörper (1,5,7,11,14,16,19,25,26,27) zu einem ein Vorprodukt bildendes Rohr (2,6,8,13,15,18,23,28,35,38) gewickelt bzw. gerollt wird, die einander gegenüberliegenden Endbereiche (3,4,9,10,17,18) oder Teile bzw. die gesamte Kontaktfläche des Rohrs (2,6,8,13,15,18,23,28,35,38) miteinander durch stoff-, kraft- oder formschlüssige Verbindungstechniken oder Kombinationen daraus in Wirkverbindung gebracht werden, das Rohr (2,6,8,13,15,18,23,28,35,38) bzw. daraus erzeugte Rohrabschnitte zumindest partiell konturiert und mindestens ein ring- oder scheibenförmig ausgebildetes Bauteil zur Erzeugung eines Dicht- bzw. Stopperelements (24,29,44) im konturierten Bereich des Rohrs bzw. des Rohrabschnitts (2,6,8,13,15,18,23,28,35,38) abgetrennt wird, **dadurch gekennzeichnet, dass** durch partielles Einschneiden in einem blech- oder folienartig ausgebildeten Grundkörper (16) mit anschließender Verformung in Längs- oder Querrichtung des Grundkörpers (16) ein zumindest partiell sich erstreckendes Streckmetall (17) erzeugt wird.

2. Verfahren nach Anspruch 1, **dadurch gekennzeichnet, dass** der Grundkörper (16) aus Abschnitten eines Streckmetalls (16') und Abschnitten (16") eines Blech- oder Folienstreifens zusammengesetzt wird.

3. Verfahren nach Anspruch 1 oder 2, **dadurch gekennzeichnet, dass** als Grundkörper mehrere neben und/oder übereinander angeordnete Blech- bzw. Folienstreifen (11,12) eingesetzt werden.

4. Verfahren nach einem der Ansprüche 1 bis 3, **dadurch gekennzeichnet, dass** am Grundkörper (16) Bereiche unterschiedlicher Dicke erzeugt werden.

5. Verfahren nach einem der Ansprüche 1 bis 4, **dadurch gekennzeichnet, dass** bei Einsatz mehrerer Blech- oder Folienstreifen (11,12) selbige stoff-, form- oder kraftschlüssig, oder Kombinationen hieraus, miteinander in Wirkverbindung gebracht werden.

6. Verfahren nach einem der Ansprüche 1 bis 5, **dadurch gekennzeichnet, dass** die einander gegenüberliegenden Enden (3,4,9,10,17,18) des Rohrs (2,8,18) über ihre gesamte Länge durch thermische Behandlung, insbesondere durch Schweißen, miteinander verbunden werden.

7. Verfahren nach einem der Ansprüche 1 bis 6, **dadurch gekennzeichnet, dass** an einem der Endbereiche des Rohrs (38) ein Umformvorgang vorgenommen wird, dergestalt, dass das Rohrende (39) nach dem Umformen einen L-förmigen Querschnitt aufweist.

8. Verfahren nach einem der Ansprüche 1 bis 7, **dadurch gekennzeichnet, dass** aus dem vertikal verlaufenden Abschnitt des L-Profils ein scheibenförmiges Stopperelement (44) vorgebbarer Abmessung herausgetrennt wird.

9. Verfahren nach einem der Ansprüche 1 bis 8, **dadurch gekennzeichnet, dass** das Rohr (35), über seine gesamte Länge gesehen, einem Konturier- bzw. Formgebungsprozess zugeführt wird und anschließend das Rohr (35) in eine entsprechende Anzahl ringförmig ausgebildeter Bauteile zur Erzeugung von Stopperelementen aufgeteilt wird.

10. Verfahren nach einem der Ansprüche 1 bis 9, **dadurch gekennzeichnet, dass** die ring- oder scheibenförmigen Bauteile vom Rohr (38,38) abgeschnitten oder abgestanzt werden.

11. Verfahren nach einem der Ansprüche 1 bis 10, **dadurch gekennzeichnet, dass** das fertige scheiben- oder ringförmig ausgebildete Stopperelement (24,29,44) zur Einstellung vorgebbarer Oberflächeneigenschaften einem Prägeprozess unterzogen wird.

12. Verfahren nach einem der Ansprüche 1 bis 11, **dadurch gekennzeichnet, dass** ebene oder mit einer topographischen Oberfläche versehene Stopperelemente hergestellt werden.
